# EUROPEAN PATENT APPLICATION

(11) **EP 2 554 847 A2**
(43) Date of publication of application: **06.02.2013**
(21) Application number: 12177760.1
(22) Date of filing: 25.07.2012
(51) Int. Cl.: F04B 53/10, F16K 15/14, F04B 43/02

(54) **An integrated microfluidic check valve and device including such a check valve**

(30) Priority: 02.08.2011 US 201113196405
(71) Applicant: Teledyne Dalsa Semiconductor Inc., Waterloo, ON N2V 2E9 (CA)
(72) Inventor: Johnstone, Robert, Montreal, Québec H3V 1B4 (CA); Martel, Stéphane, La Prairie, Québec J5R 6J2 (CA)
(74) Representative: Talbot-Ponsonby, Daniel Frederick

(57) **Abstract**

A microfluidic check valve has a first chamber (62) divided by a barrier (66) into first and second subchambers (62a,62b) having respectively an inlet port (68) and an outlet port (70). A membrane (56) forms a wall of the first chamber and co-operates with the barrier (66) to selectively permit and prevent fluid flow between the inlet and outlet ports (68,70). A second chamber (54) adjoining the first chamber (62) has a wall formed by the membrane (56). A microfluidic channel (72) establishes fluid communication between the second chamber (54) and the first subchamber (62a). The membrane (56) deflects to permit fluid flow around the barrier (66) when the pressure in the first subchamber (62a) is lower than the pressure in the second subchamber (62b). A microfluidic diaphragm pump comprising two of such check valves is also disclosed.

## Description

### Field of the Invention

This invention relates to the field of microfluidic systems, and more particularly to a microfluidic a micro fluidic check valve and a device including such a check valve.

### Background of the Invention

A common component in any fluidic system is the check-valve, which allows fluid to flow in one direction, while preventing flow in the opposite direction. Check-valves are therefore important components for controlling the direction of flow. Further, the opening pressure of some check-valves can be tailored to control the amount of positive pressure necessary to initiate flow, and these types of check-valves can also be used to passively regulate pressure. As such, check-valves are a fundamental component in the design of fluidic systems.

In the design of microfluidic systems, it is extremely useful to have access to methods and designs to fabricate miniature check-valve. Despite a number of designs for microfabricated check-valves in general, existing designs are only suitable for fabricating discrete components. For integrated microfluidic systems, such as lab-on-chip (LOC) devices, more integrated fabrication methods are the norm. In these microfabrication processes, all fluidic components are constructed using the same sequence, and so component designs and fabrication technologies much be selected to support as wide a range of components as possible.

For LOC devices, which have moved strongly towards laminated structures that are built from discrete layers, existing check-valve designs are inappropriate. Because of this omission, LOC designs have instead relied on externally actuated valves (typically using pneumatic controls) to provide functionality. Unfortunately, this approach has the significant drawback that additional control signals need to be routed off-chip, and then supplied by external infrastructure. This affects the cost and reliability of LOC technologies when applied to an application (for example, a molecular biology protocol). Also, the relatively large size of pneumatic connections limits the amount of functionality that can be integrated on a chip, increasing overall system costs. Additionally, as a mechanical connection must be made at the time of use, pneumatic connections reduce reliability and increase the need for operator training.

As a particular example of the problem, consider the case of microfluidic "peristaltic" pumps. These pumps consist of three pneumatically actuated valves connected in series. By using an appropriate sequence of control signals, the valves can be used to pump liquid. Because of the sequence of valve openings and closings, these devices are commonly understood to perform in the same manner as a macroscopic peristaltic pump, but using discrete compression stages instead of the continuously moving compression stages used macroscopically.

Empirical experimentation has led to designs of peristaltic pumps where the middle valve is significantly larger than the two outside valves. These pumps can thus also be considered, more accurately, as a reciprocating membrane pump (bellows pump). The inflow and outflow check-valves that are normally present in a reciprocating membrane pump have been replaced with pneumatic valves, whose control signals are set to mimic the operation of a check-valve. The lack of suitable check-valves therefore triples the number of off-chip pneumatic connections required for each pump. The costs, in terms of on-chip routing, chip-to-world interfaces, and off-chip macroscopic pneumatic valves, are therefore tripled due to the absence of effective check-valves.

### Summary of the Invention

According to the present invention there is provided an integrated microfluidic check valve, comprising a first chamber having inlet and outlet ports; a barrier between said inlet and outlet ports dividing said first chamber into first and second subchambers; a membrane forming a wall of the first chamber and co-operating with said barrier to selectively permit and prevent fluid flow between said inlet and outlet ports; a second chamber adjoining said first chamber and having a wall thereof formed by said membrane; and a microfluidic channel establishing fluid communication between said second chamber and said first subchamber, whereby said membrane deflects to permit fluid flow around said barrier when the pressure in said first subchamber is lower than the pressure in said second subchamber.

The microfluidic channel between the first subchamber and the second chamber ensures that the when there is excess pressure in the second subchamber, the second chamber is at the same pressure as the first subchamber, thus allowing the membrane to deflect into the second chamber.

The check valve may be constructed from a stack of layers, such as polymer layers, for example, PMDS, or epoxy or photo-definable epoxy layers sold under the trade designations SU-8 and KMPR. The substrate may also be silicon, glass or any other suitable material.

Another aspect of the invention provides an integrated microfluidic pump, comprising a first chamber having inlet and outlet ports; first and second barriers separating said first chamber into a central subchamber and first and second peripheral subchambers provided with respective said inlet and outlet ports; a second chamber adjoining said central subchamber; a first membrane forming a common wall of said central subchamber and said third chamber, whereby pressure variations in said second chamber deflect said first membrane in said central subchamber; third and fourth and third chambers adjoining said first chamber and each having a membrane shared with said first chamber bridging said respective barriers, whereby deflection of the membrane controls fluid flow over the membranes; a first microfluidic channel establishing communication between said third chamber and said first peripheral subchamber; and a second microfluidic channel establishing communication between said fourth chamber and said central subchamber. Yet another aspect of the invention provides a method of making an integrated microfluidic check valve, comprising fabricating a first chamber having inlet and outlet ports; forming a barrier between said inlet and outlet ports dividing said first chamber into first and second subchambers; providing a membrane forming a wall of the first chamber and co-operating with said barrier to selectively permit and prevent fluid flow between said inlet and outlet ports; providing a second chamber adjoining said first chamber and having a wall thereof formed by said membrane; and forming a microfluidic channel to establish fluid communication between said second chamber and said first subchamber, whereby positive pressure in said second subchamber deflects said membrane to permit fluid flow around said barrier.

### Brief Description of the Drawings

The invention will now be described in more detail, by way of example only, with reference to the accompanying drawings, in which:-

Figure 1 is a schematic diagram of a prior art valve;

Figures 2A -2D are diagrammatic views of a check valve in accordance with one embodiment of the invention; and

Figures 3A -3B are diagrammatic view of a reciprocating pump including check-valves in accordance with an embodiment of the invention and compatible with LOC manufacturing techniques; and

Figure 4 depicts a semi-active check valve with an electrostatic actuator.

### Detailed Description of Embodiments of the Invention

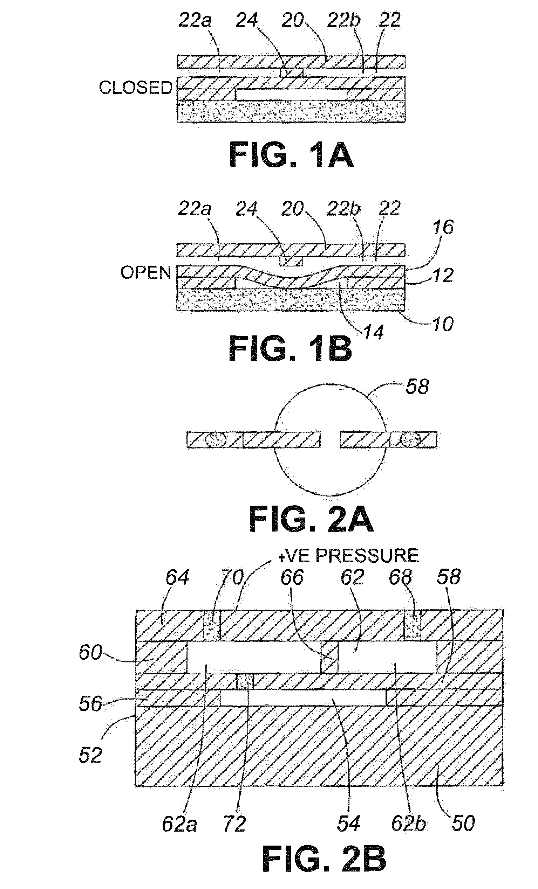

A prior art valve, known as a Mathies' valve, is shown in Figures 1A - 1B, where Figure 1A shows the valve in the open position and Figure 1B shows the valve in the closed position. Such a valve is described in the paper by W.H.Grover et al. entitled "Monolithic Membrane Valves and Diaphragm Pumps for Practical Large-Scale Integration in Glass Microfluidic devices" Sensors and Actuators B, vol. 89, no. 3, pg. 315 -323 (2003), the contents of which are herein incorporated by reference. The valve consists of a substrate 10, a pneumatic layer 12 defining a chamber 14, a membrane layer 16, a cap layer 20 defining a fluid passage 22, and a barrier 24 dividing the fluid passage 22 into parts 22a, 22b.

Etched into the fluid layer are channels (not shown) for water or some other liquid. An analyte for a chemical or medical application flows through these channels.

Etched into the pneumatic layer 12 are channels (not shown) for the pneumatic signals, which are either compressed air (positive gauge pressure) or vacuum (negative gauge pressure). The pneumatic channels are used to route these pressure signal to various locations around the device.

Between the fluid passage 22 and the pneumatic layer 12 is the membrane 16, fabricated typically in poly-dimethylsiloxane (PDMS) or other material. The imposition of vacuum (negative gauge pressure) through the channels carrying the pneumatic signals to the chamber creates a pressure difference across the membrane layer that causes the PDMS to deflect downwards, moving the membrane layer 16 away from the barrier 24 as shown in Figure 1A. This movement creates an opening for the analyte to flow around the barrier. Consequently, a vacuum in the chamber 14 opens the valve. Conversely, compressed air (positive gauge pressure) in the chamber 14 creates a pressure difference across the membrane layer 16. This in turn causes the PDMS membrane 14 to deflect upwards, forcing the membrane against the barrier 24, and thus preventing the analyte from flowing through the passage 22. In order to create the pressure signals in the chamber 14, an external pneumatic connection to this chamber is required.

In accordance with embodiments of the invention, the pneumatic connection is removed. Instead, there are only two fluidic connections, namely the inlet and outlet port for the fluid being controlled.

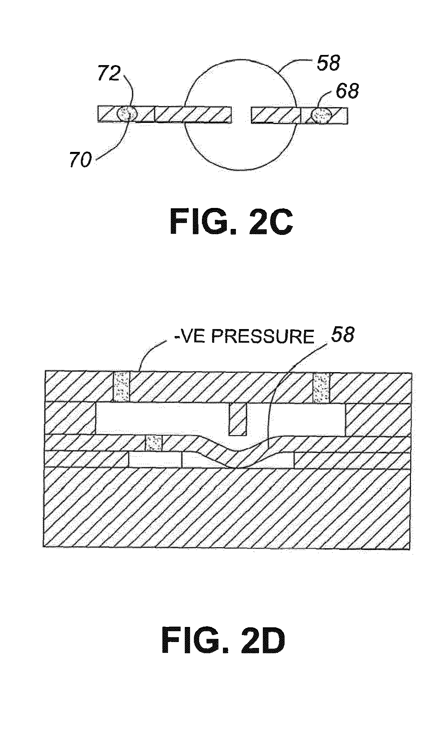

An embodiment of the invention is shown in Figures 2A - 2D, where Figures 2A, 2B show the valve in the closed position and Figures 2C, 2D show the valve in the open position.

In this embodiment the check valve comprises a substrate 50 of glass or polymer, such as PDMS, a structural layer 52 defining a chamber 54, a structural layer 56 defining a membrane 56, a structural layer 60 defining a chamber 62, and a cap structural layer 64 . The chamber 62 is divided into first and second subchambers 62a, 62b by barrier 66 integral with the cap layer 64.

Inlet port 68 is formed in the cap layer 64 through to the subchamber 62b and outlet port is formed in the cap layer through to subchamber 62a.

The structural layers may be PDMS or an epoxy or photo-defineable epoxy, known under the trade designations SU-8 or KMPR. KMPM is a photoresist and is made by Microchem Corporation.

A micro fluidic channel extends through from the subchamber 62b to the chamber 54 so that the chamber 54 is maintained at substantially the same pressure as the subchamber 62a.

When the pressure in the subchamber 62a and due to the microfluidic channel the chamber 54 is higher than in the subchamber 62b, the membrane is urged against the barrier 66 as shown in Figure 2B, and as a result the valve remains closed. On the other hand, when the pressure in the subchamber 62b exceeds that in the subchamber 62a and consequently the chamber 54, the membrane deflects into the chamber 54, as shown in figure 2D, and as a result the valve opens. The valve thus operates as a check valve wherein pressurized fluid will flow from the inlet port 68 to the outlet port 70, but not in the reverse direction.

Unlike the prior art check valve shown in Figures 1A, 1B, which is a three-port device (two fluidic ports and one pneumatic port), this check valve is a two-port device (two fluidic ports only).

The above conversion is accomplished by adding one or more microfluidic channels (vias) to the membrane layer 56 to equalize the pressures in the downstream subchamber and the chamber under the membrane. This microfluidic channel in the membrane layer allows the fluid (either a gas or a liquid) to flow across the membrane and into the chamber under the membrane 58. This microfluidic channel should be located so that the pressure in the chamber 54 under the membrane matches that of the outflow or downstream end of the valve in the subchamber 62a.

As a result of this modification, the portion of the membrane downstream of the barrier no longer sees any pressure difference, and so experiences no force driving deflection. However, the portion of the membrane upstream of the barrier sees a pressure difference, which is the same as the pressure difference between the inlet and outlet ports. This pressure difference, although over a smaller portion of the membrane is still sufficient to cause deflection of the membrane.

Thus, when the inlet port is at a pressure greater than the outlet port (positive pressure differential), the pressure difference causes the membrane to deflect downwards, opening a space around the barrier for the fluid to flow. Conversely, when the inlet port is at a lower pressure than the outlet port (negative pressure differential), the pressure difference across the membrane deflects the membrane up, causing the membrane to push up against the barrier, sealing off flow.

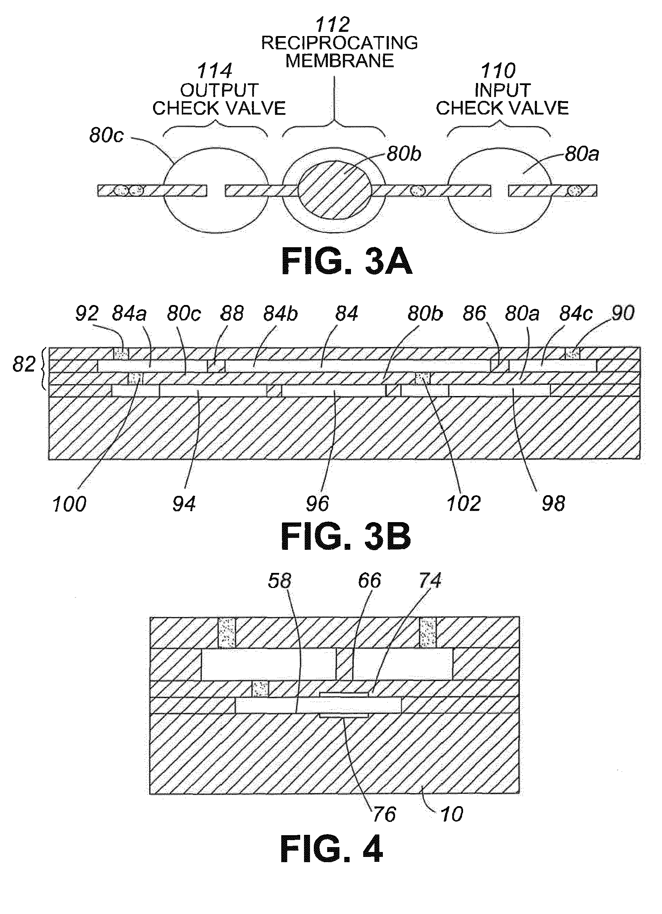

A practical application of the check valve is shown in Figures 3A and 3B, which depict a reciprocating pump design. In a prior art implementation, such a valve would be constructed from three valves, each valve requiring a separate pneumatic connection or other actuation mechanism.

The pump is constructed of multiple structural layers 82 of PMDS or epoxy polymer, such as SU-8 or KMPR, as in the case of the valve shown in Figures 2A, 2B.

The pump includes a main chamber 84 divided into subchambers 84a, 84b, 84c, by barriers 86, 88. Inlet port 90 communicates with subchamber 84c and outlet port 92 with subchamber 84a.

Chambers 94, 96, and 98 are located under membranes 80a, 80b, and 80c. Microfluidic channel 100 connects subchamber 84a to chamber 94 and microfluidic channel 102 connects subchamber 80b with chamber 98. A pneumatic microfluidic channel (not shown) communicates with the central chamber 96 to pulse the pressure therein. The barrier 86 separate the input check valve from the central chamber and the barrier 88 separates the output check valve from the central chamber. When the pressure in the chamber 96 is increased, the membrane 80b deflects upwardly to increase the pressure in the central subchamber 80b, which has the effect of closing the input check valve defined by membrane 80a (because the pressure in subchamber 84b is higher than in subchamber 84c) and opening the output check valve defined by the membrane 80c (because the pressure in subchamber 84a is lower than in subchamber 84b), thereby allowing fluid in central subchamber 84b, forming pump portion 112, to be expelled through the outlet 92. Similarly, negative pressure in the chamber 96 deflects the membrane 80b downwardly, causing the input check valve 110 defined by the membrane 80a to open (because the pressure in subchamber 84c is greater than in subchamber 84b) and the output check valve 114 defined by the membrane 80c to close (because the pressure in subchamber 84c is lower than in subchamber 84b) , thereby drawing fluid through the input port 90. By pneumatically pulsing the fluid in the chamber 96, fluid can be alternately drawn in through the inlet port 90 and expelled through the outlet port 92.

It will thus be seen that with the use of proper check-valves, two of the pneumatic connections required in the prior art can be eliminated.

The chamber 96 under the reciprocating membrane 80b is still isolated from the fluid, and so requires some external pneumatic signal to deflect upwards and downwards, but the two outside valves are completely contained, requiring no external support. In this embodiment an alternating pressure applied to the cavity under the reciprocating membrane will cause fluid to flow from right to left in this embodiment. However, it is possible to use alternate methods of reciprocating the membrane, such as electrostatic actuation.

The semi-active check valve shown in Figure 4 is similar to that shown in Figures 2A - 2D except that it includes metal electrodes 74, 76 deposited on opposite sides of the chamber 54 under the barrier 66. The electrodes are connected by tracks (not shown) to the outside world, whereby application of a voltage across the metal electrodes generates an electrostatic force to urge the membrane 58 upwards or downwards. The tracks to these electrodes can be incorporated in the structure in the manner described in our co-pending entitled "A method of making a Microfluidic Device" and filed on even date herewith, the contents of which are herein incorporated by reference. Thus by applying an attractive voltage, the membrane can be actively deflected downwardly to override the effects of pressure within the valve chamber and force the valve into the open position.

It will be appreciated that in the above embodiments, the chamber below the membrane can equally well be placed above the membrane.

Embodiments of the invention can be fabricated by bonding or laminating structural polymer layers onto a glass or PDMS substrate. As noted the structural polymer layers may be SU-8 or KMPR epoxy photoresist.

The microfluidic channels can be formed by drilling holes, cutting holes, lithography and etching, or other machining processes. The patterned PDMS membrane can be bonded normally between the glass layers.

Molded PDMS layers can be bonded or laminated together. In the molding process, the PDMS layers are fabricated to provide the necessary channels, chambers, and ports. Multiple layers can be bonded together to build the complete fluidic circuit. A technique is described in our co-pending application entitled "A method of making a microfabricated device" and filed on even date herewith, the contents of which are herein incorporated herein by reference.

The microfluidic structures can be manufactured by laminating multiple polymer layers. In this case, the layers are patterned lithographically prior to bonding.

By patterning the membrane layer found used in the traditional valve designs, existing microfabrication protocols can be extended to support check-valves. This simplifies system design, reducing the requirement for off-chip pneumatic connections.

Check valves constitute a basic platform technology in laboratory-on-chip (LOC) devices and can be used to fabricate complex components for end user applications involving a large array of chemical and molecular biology applications. Further applications include use as a reactor platform for chemical synthesis reactions.

The check valve is compatible with CMOS manufacturing processes. It will be appreciated that a large number of such valves can be integrated into a single device.

## Claims

1. An integrated microfluidic check valve, comprising:
a first chamber having inlet and outlet ports;
a barrier between said inlet and outlet ports dividing said first chamber into first and second subchambers;
a membrane forming a wall of the first chamber and co-operating with said barrier to selectively permit and prevent fluid flow between said inlet and outlet ports;
a second chamber adjoining said first chamber and having a wall thereof formed by said membrane; and
a microfluidic channel establishing fluid communication between said second chamber and said first subchamber, whereby said membrane deflects to permit fluid flow around said barrier when the pressure in said first subchamber is lower than the pressure in said second subchamber.

2. The integrated microfluidic check valve of claim 1, wherein the first subchamber contains said outlet port and said second subchamber contains said inlet port, whereby said membrane deflects to permit fluid flow when the pressure is higher in the inlet port than the outlet port.

3. The integrated microfluidic check valve of claim 1 or 2, wherein the first and second chambers are formed in a block of structural material with the membrane forming the floor of the first chamber and the roof of the second chamber, which is located below the first chamber.

4. The integrated microfluidic check valve of claim 1 or 2, wherein the first and second chambers are formed in a block of structural material with the membrane forming the floor of the first chamber and the roof of the second chamber, which is located above the first chamber.

5. The integrated microfluidic check valve of any one of claims 1 to 3, wherein the first and second chambers are formed in a stack of structural layers.

6. The integrated microfluidic check valve of claim 5, wherein the structural layers are polymer layers.

7. The integrated microfluidic check valve of claim 6, wherein the polymer is an epoxy-based polymer.

8. The integrated microfluidic check valve of any one of claims 1 to 7, wherein the membrane is made of poly-dimethylsiloxane.

9. The integrated microfluidic check valve of any one of claims 1 to 8, further comprising an electrostatic actuator for actively displacing said membrane.

10. The integrated microfluidic check valve of claim 9, wherein the electrostatic actuator comprises a pair of electrodes on opposed walls of the second chamber.

11. An integrated microfluidic pump, comprising a pair of check valves as claimed in any one of claims 1 to 10 forming respectively an input check valve and an output check valve, and a central chamber communicating with the input and output check valves, the central chamber including a reciprocating membrane to move fluid through the pump.

12. A method of making an integrated microfluidic check valve, comprising:
fabricating a first chamber having inlet and outlet ports;
forming a barrier between said inlet and outlet ports dividing said first chamber into first and second subchambers;
providing a membrane forming a wall of the first chamber and co-operating with said barrier to selectively permit and prevent fluid flow between said inlet and outlet ports;
providing a second chamber adjoining said first chamber and having a wall thereof formed by said membrane; and
forming a microfluidic channel to establish fluid communication between said second chamber and said first subchamber, whereby positive pressure in said second subchamber deflects said membrane to permit fluid flow around said barrier.

13. The method of claim 12, wherein the device is fabricated by bonding together a stack of pre-formed structural layers.

14. The method of claim 12 or 13, wherein the pre-formed structural layers are polymer layers.

15. The method of claim 14, wherein the polymer is an epoxy-based polymer.
